# EUROPEAN PATENT SPECIFICATION

(11) **EP 2 335 445 B1**
(45) Date of publication and mention of the grant of the patent: **06.11.2019**
(21) Application number: 09789257.4
(22) Date of filing: 03.09.2009
(51) Int. Cl.: H04L 5/00, H04W 72/12, H04B 7/024, H04B 7/06, H04W 52/40

(54) **AN ARCHITECTURE TO SUPPORT NETWORK-WIDE MULTIPLE-IN-MULTIPLE-OUT WIRELESS COMMUNICATION OVER AN UPLINK**
ARCHITEKTUR ZUR UNTERSTÜTZUNG VON NETZWERKWEITER DRAHTLOSER KOMMUNIKATION MIT MEHREREN EINGÄNGEN UND MEHREREN AUSGÄNGEN ÜBER EINE AUFWÄRTSSTRECKE
ARCHITECTURE POUR SUPPORTER UNE COMMUNICATION SANS FIL À ENTRÉES MULTIPLES ET SORTIES MULTIPLES DANS TOUT LE RÉSEAU SUR UNE LIAISON MONTANTE

(30) Priority: 18.09.2008 US 233150
(43) Date of publication of application: 22.06.2011
(73) Proprietor: Alcatel-Lucent USA Inc., Murray Hill, NJ 07974-0636 (US)
(72) Inventor: BALACHANDRAN, Krishna, Morganville, NJ 07751 (US); KADABA, Srinivas, R., Chatham, NJ 07928 (US); KARAKAYALI, Kemal, M., Highland Park, NJ 08904 (US); RUDRAPATNA, Ashok, Basking Ridge, NJ 07920 (US)
(74) Representative: Browne, Robin Forsythe
(86) International application number: PCT/US2009/004980
(87) International publication number: WO 2010/033157

(56) References cited:
- US-A1- 2006 153 147
- US-A1- 2007 280 175

## Description

### BACKGROUND OF THE INVENTION

### 1. Field of the Invention

This invention relates generally to communication systems, and, more particularly, to wireless communication systems.

### 2. Description of the Related Art

Base stations in wireless communication systems provide wireless connectivity to users within a geographic area, or cell, associated with the base station. In some cases, the cell may be divided into sectors that subtend a selected opening angle (e.g., three 120° sectors or six 60° sectors) and are served by different antennas. The wireless communication links between the base station and each of the users typically includes one or more downlink (DL) (or forward) channels for transmitting information from the base station to the mobile unit and one or more uplink (UL) (or reverse) channels for transmitting information from the mobile unit to the base station. Multiple-input-multiple-output (MIMO) techniques may be employed when the base station and, optionally, the user terminals include multiple antennas. For example, a base station that includes multiple antennas can concurrently transmit multiple independent and distinct signals on the same frequency band to same user or multiple users in a cell/sector. MIMO techniques are capable of increasing the spectral efficiency of the wireless communication system roughly in proportion to the number of antennas available at the base station.

US 2006/015314781 is directed towards an improved concept for so-called fast macro diversity switching (FMS) in mobile wireless networks. FMS tales advantage of a decorrelation of shadow fading effects to select a base station with a lowest instantaneous path loss for communicating uplink and downlink channels to a particular mobile station. According to such a concept, a plurality of base stations have broadcast channels (non-switched) for wireless signals including downlink and uplink signals. A base station controller, or another system timing control, establishes an initial timing of bursts, including their timing advances, and establishes initial guard bands between bursts. A zone manager means thereafter controls the FMS of dedicated channels among transceiver stations. Thereby the zone manager includes means for providing switching information for identifying candidate transceiver stations available to be used to service dedicated channels for the mobile stations. It also includes a control for dynamically switching among selected transceiver stations to provide dedicated channels for mobile stations. Since FMS has the potential for causing bursts to have time shifts that are of a magnitude to cause unwanted burst overlap, the zone manager also includes macro diversity timing control that controls the timing of burst in order to reduce burst overlapping dedicated channels that have been dynamically switched. Hence, US 2006/015314781 is essentially related to the improvement of uplink and/or downlink communication by using fast macro diversity switching (FMS) between different base stations, i.e. selection combining.

Document US 2007/280175 A1 discloses another example of the prior art. Conventional MIMO techniques coordinate operation of multiple antennas that are co-located with the coordinating base station. For example, the multiple antennas associated with a base station (BS) are typically configured so that the antennas are less than about 10 m from the base station. The signals transmitted from the base station to the antennas and then over the air interface to the mobile station (MS) on DL may be phase aligned so that they can be coherently combined at the receiver, e.g., the mobile station. Constructive and/or destructive interference of coherent radiation from the multiple antennas can therefore be used to amplify the signal in selected directions and/or null the signal in other directions. Processing of the coherent signals may also be used to minimize the mutual interference between multiple transmitters. Similarly on UL, signals received from multiple antennas can be combined to maximize signal strength, maximize SINR, detect multiple signals simultaneously through well-known algorithms such as MRC (maximum ratio combining), MMSE (minimum mean squared error), and MLSE (maximum likelihood sequence estimator). However, conventional MIMO does not address the inter-cell interference caused by uplink and/or downlink transmissions in neighboring cells.

A new class of multi-antenna techniques called Inter-Base Station MIMO (IBS-MIMO) has been proposed to enhance air-interface performance by enabling concurrent transmission of superposed signal waveforms from antennas at different base stations to one or more mobile terminals in such a way that the resulting mutual interference is suppressed. On the uplink (UL), different MSs concurrently transmit (in a coordinated fashion) superposed waveforms from their antennas to one or more BSs. Subsequently, the received signals at multiple BSs may be coherently processed to extract the signals of each of the transmitting MSs. In this process, the signal transmitted by a specific MS can be received at different BSs. Such reception across BSs requires support from the radio access network in terms of control signaling to coordinate transmissions from the MSs, and more importantly data plane exchanges for processing the data-bearing signals received from the coordinated MSs.

Implementation of IBS-MIMO techniques is strongly constrained by existing network architectures and expected future developments in network architectures. IBS-MIMO techniques should be implemented in a manner that is, to the greatest degree possible, consistent with these architectural constraints to minimize disruptions caused by implementation of these techniques.

### SUMMARY OF THE INVENTION

The disclosed subject matter is directed to addressing the effects of one or more of the problems set forth above. The following presents a simplified summary of the disclosed subject matter in order to provide a basic understanding of some aspects of the disclosed subject matter. This summary is not an exhaustive overview of the disclosed subject matter. It is not intended to identify key or critical elements of the disclosed subject matter or to delineate the scope of the disclosed subject matter. Its sole purpose is to present some concepts in a simplified form as a prelude to the more detailed description that is discussed later.

In accordance with a first aspect of the present invention there is provided a method of coordinating the uplink transmissions from at least one mobile unit to a plurality of coordinating base stations, the method in accordance with claim 1.

In one embodiment, a method is provided for coordinating the uplink transmissions from at least one mobile unit to a plurality of base stations. The method is implemented in a control and data plane entity and includes scheduling, at the control plane function, uplink signals for transmission from the mobile unit(s) to the plurality of coordinating base stations. The method includes receiving, at the data plane function from the plurality of base stations, signals including scheduled uplink signals transmitted from the mobile unit(s) to the plurality of base stations. The method also includes receiving, at the control plane function from the plurality of base stations, parameters needed for scheduling such as channel state information, queue status information, quality of service parameters etc. The method further includes estimating, at the data plane function, information bits transmitted in the scheduled uplink signals using the received signals and channel state information indicative of a plurality of wireless communication links between the mobile unit(s) and the plurality of base stations.

There is also disclosed herein a method for coordinating the uplink transmissions from at least one mobile unit to a plurality of coordinating base stations. The method includes receiving,at a control plane function from the plurality of coordinating base stations, parameters needed for scheduling such as channel state information, queue status information, quality of service parameters etc. Control plane function instances may be located at base stations or other entities within the radio network. The method is implemented in a first base station that is one of the plurality of base stations and includes receiving, at the first base station, scheduling information from a control plane function. The scheduling information can be used by the first base station for scheduling uplink signals for transmission from mobile units to the first base station. The method also includes providing, from the first base station to the data plane function, signals including scheduled uplink signals transmitted from the mobile unit to the plurality of base stations so that the data plane function can estimate information bits transmitted in the scheduled uplink signals.

### BRIEF DESCRIPTION OF THE DRAWINGS

The disclosed subject matter may be understood by reference to the following description taken in conjunction with the accompanying drawings, in which like reference numerals identify like elements, and in which:
FIGS. 1A, 1B, and 1C conceptually illustrate aspects of a first exemplary embodiment of a wireless communication system;
FIG. 2 conceptually illustrates a second exemplary embodiment of a wireless communication system;
FIG. 3 conceptually illustrates one exemplary embodiment of a method of operating a control plane entity in the wireless communication system shown in FIG. 1; and
FIG. 4 conceptually illustrates one exemplary embodiment of a method of operating a base station in the wireless communication system shown in FIG. 1.

While the disclosed subject matter is susceptible to various modifications and alternative forms, specific embodiments thereof have been shown by way of example in the drawings and are herein described in detail. It should be understood, however, that the description herein of specific embodiments is not intended to limit the disclosed subject matter to the particular forms disclosed, but on the contrary, the intention is to cover all modifications, equivalents, and alternatives falling within the scope of the appended claims.

### DETAILED DESCRIPTION OF SPECIFIC EMBODIMENTS

Illustrative embodiments are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, *i*.*e*., a definition that is different from the ordinary and customary meaning as understood by those skilled in the art, is intended to be implied by consistent usage of the term or phrase herein. To the extent that a term or phrase is intended to have a special meaning, *i*.*e*., a meaning other than that understood by skilled artisans, such a special definition will be expressly set forth in the specification in a definitional manner that directly and unequivocally provides the special definition for the term or phrase.

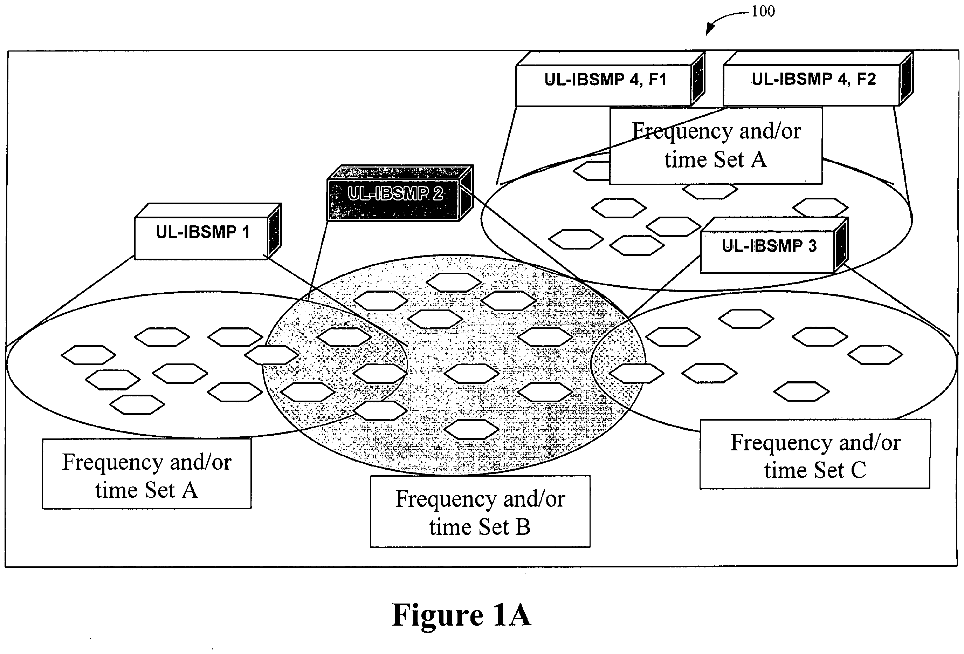

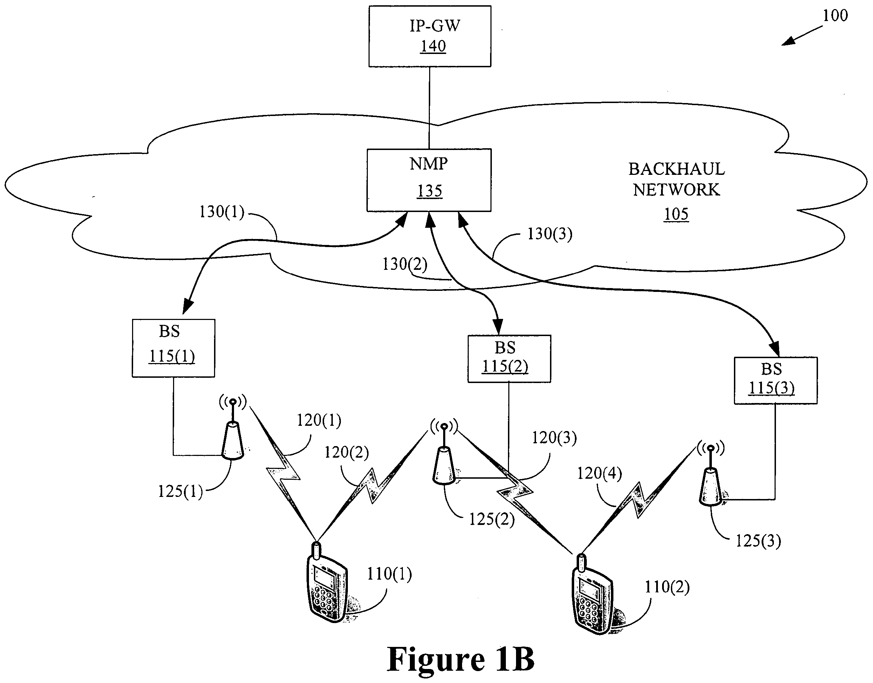

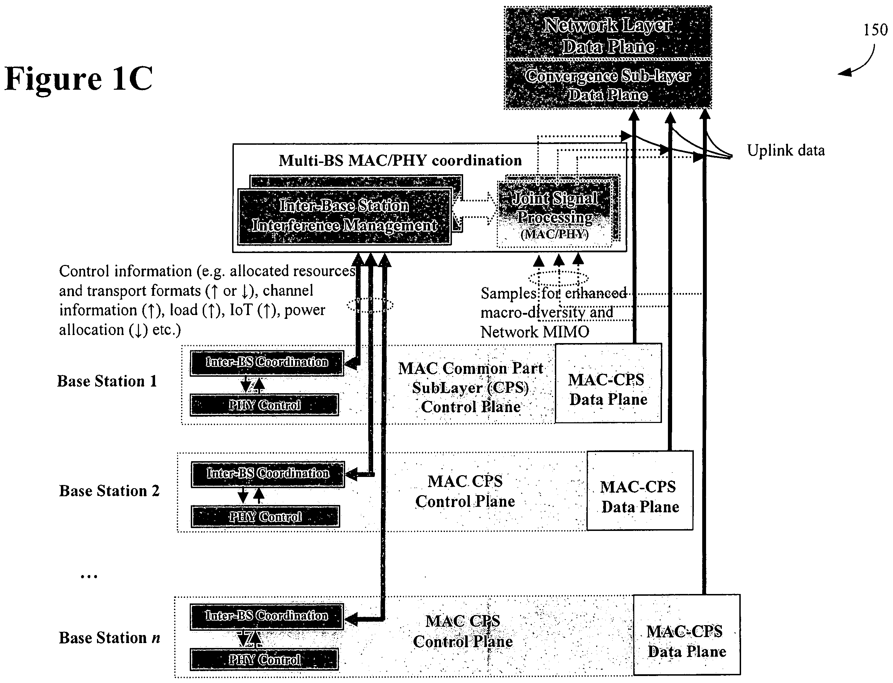

Figures 1A, 1B, and 1C conceptually illustrate aspects of a first exemplary embodiment of a wireless communication system 100. Figure 1A illustrates a typical cellular data network covering a geographical area such as a suburb or city. The base stations (not shown in Figure 1A) may all use a single carrier frequency or they may use sets of frequencies that may be distributed across the geographical area so that each location may be covered by one or more of the frequency sets A-C. In an alternative embodiment, instead of frequency sets, time assignment sets may be employed to create orthogonal resources. In this latter embodiment, instead of frequency sets A-C, time sets A-C may be employed. As a further extension, a combination of time and or frequency sets may be employed. A set of "Uplink IBS-MIMO Clusters" can be created from these base stations and frequency sets or time sets, as shown in Figure 1A. Each UL IBS-MIMO cluster consists of one or more "Uplink Inter-BS MIMO Processors" (UL-IBSMPs), that support a set of base stations that are contiguous in spatial coverage. In one embodiment, geographically neighboring IBS-MIMO clusters may not overlap unless different sets of frequencies and/or time are assigned to different clusters, as shown in Figure 1A. This separation may prevent race conditions between UL-IBSMPs that attempt to support the same base station in the event of overlap. If there is separation in terms of frequency and/or time sets (even with spatial overlap), such race conditions would also be avoided. In fact, a base station that is capable of supporting multiple frequency and/or time sets behaves like multiple base stations, and can concurrently be coordinated by multiple UL-IBSMPs, each of which supports base stations with a given frequency and/or time. Indeed, with base stations supporting multiple frequencies and time resources, spatial overlap may prove to be highly advantageous as a mobile unit within the interior of multiple clusters may get multiple IBS-MIMO benefits, from each of these clusters simultaneously.

Figure 1B conceptually illustrates a first exemplary embodiment of the wireless communication system 100. In the illustrated embodiment, the wireless communication system 100 includes a backhaul network 105 that may be used to transmit information among the various elements of the wireless communication system 100. As used herein and in accordance with common usage in the art, the phrase "backhaul network" refers to the transport network that carries wireless network related data and control signals between base stations and control plane entities such as radio network controllers. The backhaul network 105 may operate according to any combination of wired and/or wireless communication standards and/or protocols. Exemplary standards and/or protocols that can be used to implement the backhaul network 105 include Frame Relay, ATM, Ethernet, and the like, as well as higher layer protocols such as ATM, IP, and the like. Techniques for accessing the backhaul network 105 and/or communicating information through the network 105 are known in the art and in the interest of clarity only those aspects of these techniques that are relevant to the present techniques will be discussed herein.

The wireless communication system 100 is used to provide wireless connectivity to one or more mobile units 110(1-2) so that they may access the network 105. The identifying indices (1-2) may be used to indicate subsets of the mobile units 110(1-2). However, these indices may be dropped when referring to the mobile units 110 collectively. This convention may be applied to other elements depicted in the drawings and indicated by a distinguishing numeral and one or more identifying indices. Exemplary mobile units 110 may include cellular telephones, personal data assistants, smart phones, pagers, text messaging devices, Global Positioning System (GPS) devices, network interface cards, notebook computers, desktop computers, and the like. In various alternative embodiments, the mobile units 110 may include a single antenna or a plurality of antennas for communicating with the wireless communication system 100.

In the illustrated embodiment, the wireless communication system 100 includes a plurality of base stations (BS) 115 that are used to provide wireless connectivity to the mobile units 110. Although the techniques in the present application will be discussed in the context of a base stations 115, persons of ordinary skill in the art having benefit of the present disclosure should appreciate that alternative embodiments may use other entities for providing wireless connectivity. Exemplary entities may include access point, base station routers, and the like. Furthermore, persons of ordinary skill in the art having benefit of the present disclosure should appreciate that the base stations 115 may be configured to provide wireless connectivity to cells or sectors within cells. Accordingly, the techniques described in the present application may be applied to wireless communication to cells or sectors within cells.

Each base station 115 is configured to receive uplink (or reverse link) information from the mobile units 110 over air interfaces 120 and perform physical (PHY) layer processing and medium access control (MAC) layer functions. The PHY layer and MAC layer functions in the base stations 115 (as well as in other entities in the network) may be separated into control plane functions and data plane functions. Data plane operations typically directly access and process the received signals. In one embodiment, the data plane functions can be used to facilitate transmission of uplink data from the MAC layer in the base stations 115 to network layers and/or convergence sub-layers, as will be discussed herein. Control plane operations include selection of pilot and/or data channel information, , scheduling, selection of transmission formats, and providing instruction messages needed to transmit and/or receive data, as well as other related operations that may be used to control communication between base stations 115 and mobile units 120.

Processing of the received uplink information by the base stations 115 may include demodulating the received uplink information to create soft decision information and/or decoding the demodulated soft information. Since the physical and/or medium access control layer functionality is used to support radio bearers associated with the air interfaces 120, portions of the functionality implemented in the base stations 115 may be referred to as "bearer plane" functionality. To implement various control, data, and/or bearer plane functions, the base stations 115 use scheduling information, transmission formats, transmission times, and/or packets provided by control plane entities, as discussed herein. Techniques for implementing control, data, and/or bearer plane functionality such as physical and/or medium access control layer functionality in the base stations 115 are known in the art and in the interest of clarity only those techniques that are relevant to the present invention will be discussed herein. Each base station 115 is communicatively coupled to one or more antennas 125 that may be used to transmit and receive modulated radio frequency signals over the air interfaces 120.

The base stations 115 are also capable of gathering state information associated with communication between the base stations 115 and the mobile unit 110. One type of state information is wireless channel state information that indicates the current state of the wireless communication channel(s) supported by the air interfaces 120. The base station 115 can determine the wireless channel state information using known techniques such as measurements of pilot signal strengths, signal-to-interference-plus-noise ratios, C/I ratios, and the like. Another type of state information is queue state information that indicates the current state of queues or buffers maintained by the mobile units 110 for storing data before this data is transmitted over the uplink to the base stations 115. For example, queue state information may indicate current buffer occupancy, an overflow condition, an underflow condition, and the like. Latency requirements for the mobile units 110 may also be included in the state information.

One or more backhaul links 130 may be established in the backhaul network 105 to facilitate communications with the base stations 115. For example, state information collected by the base stations 115 can be transmitted from the base stations 115 to various control plane entities over backhaul links 130. Uplink data-bearing information such as soft decision symbols and/or decoded symbols may be transmitted over the backhaul links 130. The base stations 115 are also configured to receive control signaling over the backhaul links 130. Techniques for establishing, maintaining, and/or tearing down backhaul links 130 in the backhaul network 105 are known in the art and in the interest of clarity only those aspects of these techniques that are relevant to the subject matter described in the present application will be discussed herein.

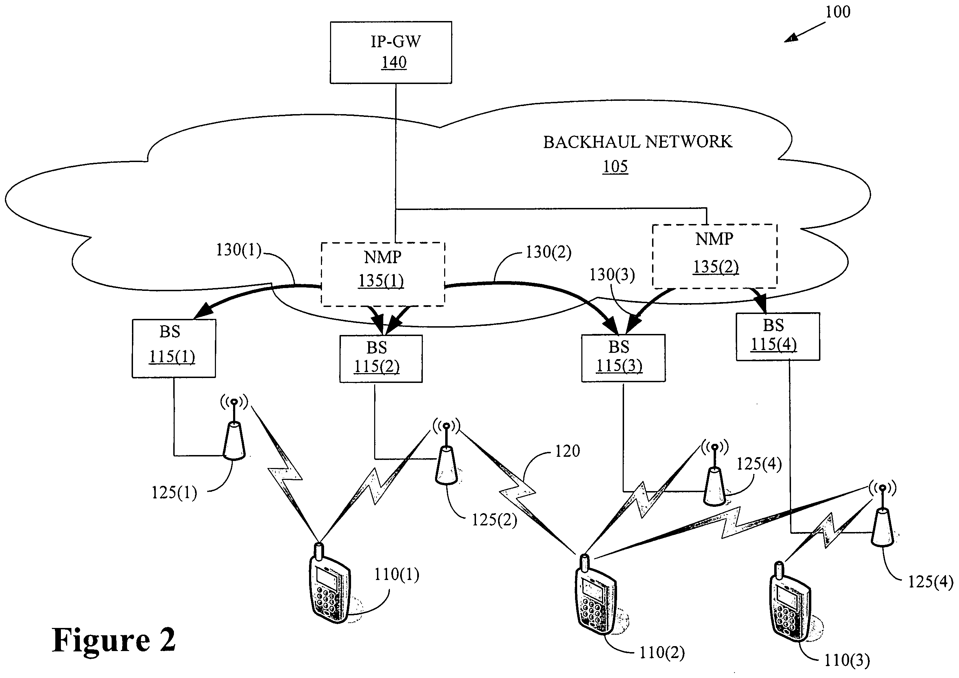

The wireless communication system 100 also includes a control plane entity 135 that is used to support the data plane entity in carrying out coherent combination of information received from the mobile units 110 by one or more base stations 115. In one embodiment, the data plane entity 135 may be used to combine soft decision information received from multiple base stations 115 and/or decoded symbols received from multiple base stations 115. Coordinating reception of the signal waveforms in this manner can reduce or suppress the mutual interference between the signal waveforms transmitted concurrently to multiple base stations 115 by multiple mobile units 110. In the illustrated embodiment, this data plane entity is referred to as a network multiple-input-multiple-output (MIMO) processor (NMP) 135. In one embodiment, the network MIMO processor 135 may be co-located with one or more base stations 115. In yet another embodiment, the network MIMO processor 135 may be one or more separate physical network nodes dedicated to NMP functionality that are implemented in the backhaul network 105. Thus, the uplink network MIMO processor 135 may be implemented as either a centralized entity (as depicted in Figure 1) or as distributed functionality (as depicted in Figure 2).

In the illustrated embodiment, the base stations 115 provide the collected state information to the network MIMO processor 135, which then generates control signaling that is provided to the base stations 115 to coordinate uplink communication from the mobile unit 110. For example, the control part of the network MIMO processor 135 can use the wireless channel state information and/or queue state information to schedule uplink transmissions and compute transmission formats for transmitting the scheduled uplink information. The scheduling information and the computed transmission formats can then be communicated to the base stations 115 over the backhaul links 130. The transmission format may include parameters such as information block size, error control codes, code rates, modulation orders, antenna beamforming weights, transmit power, orthogonal frequency division multiplexing (OFDM) tones or tiles, and the like. The scheduling and transmission format information may then be used by the mobile units 110 for scheduled uplink communications.

The uplink network MIMO processor 135 may also participate in selecting the base stations 115 that are part of the uplink coordination cluster for each mobile unit 110. In one embodiment, the uplink network MIMO processor 135 determines membership in coordination clusters for each mobile unit 110 based on information provided by the various base stations 115. Membership may be predetermined and/or dynamically determined by the uplink network MIMO controller 135. Alternatively, cluster membership may be determined by other entities in the network 100 such as the base stations 115. Once membership in the coordination clusters has been determined, communication channels over the backhaul links 130 may be set up so that the state information can be transmitted from the base stations 115 to the uplink network MIMO processor 135 and control information can be transmitted back to the base stations 115.

In one embodiment, the coordination cluster associated with each mobile unit 110 may be initially determined when the mobile unit 110 first accesses the network 100. For example, the uplink network MIMO processor 135 (and/or other entities in the network 100) may determine whether a particular mobile unit 110 can benefit from application of network MIMO techniques. If the mobile unit 110 is handled using network MIMO, the uplink network MIMO processor 135 can select the coordination cluster for the mobile unit 110. In some cases, the mobile unit 110 may be handled by a single base station 115 instead of being associated with a coordination cluster. The uplink network MIMO processor 135 may also periodically update the status of the mobile unit 110. Updating may include modifying base station membership in the coordination cluster associated with the mobile unit 110, changing the status of the mobile unit 110 to apply network MIMO techniques, changing the status of the mobile unit 110 to deactivate application of network MIMO techniques, and the like.

The wireless communication system 100 also includes an Internet protocol gateway (IP-GW) 140. The IP gateway 140 is predominantly a bearer plane device that is configured to perform IP layer functions such as providing a gateway for uplink packets received by the base stations 115 to travel in or out of the wireless communication system 100. However, in some embodiments, the IP gateway 140 may serve control plane functions in some deployed standards such as EV-DO and HSPA.

In operation, the network MIMO processor 135 is used to coherently combine information received from the base stations 115 to mitigate mutual interference caused by concurrent uplink transmissions from multiple mobile units 110. In one embodiment, the network MIMO processor 135 schedules uplink signals transmitted by the mobile units 110, *e*.*g*., based upon channel state information and/or scheduling requirements provided by base stations 115 in a coordination cluster associated with the mobile unit 110. The network MIMO processor 135 may then receive signals associated with the scheduled transmissions from the base stations 115. For example, the base stations 115 may transmit soft decision information and/or decoded symbols associated with the scheduled uplink transmissions. The network MIMO processor 135 can then estimate information bits transmitted in the scheduled uplink signals using the received signals and the channel state information.

The centralized network MIMO processor 135 shown in Figure 1 collects uplink signals from all coordinating base stations 115 (or sectors). For example, each base station 115 can pre-process the received uplink signals to derive soft-decision information using well known algorithms such as Maximal Ratio Combining (across antennas 125 at the base station 115) or Minimum Mean Squared Error (MMSE) based receiver beam-forming techniques. The soft-decision information derived at each base station 115 may then be quantized and transported to a network MIMO processor 135 where the soft-decision information received for each mobile unit 110 from different base stations 115 can be coherently combined. After soft-combining, the network MIMO processor 135 then feeds the soft-decision information into a decoder which obtains an estimate of the information bits. Alternatively, the combined samples can be further processed to generate log likelihood ratios (LLRs) that are the input to decoders. The base stations 115 can convey these LLRs to the network MIMO processor 135 for further combining and decoding. Consequently, different levels of pre-processing at the base stations 115 reduce the backhaul bandwidth consumed as well as the computation that needs to be performed at the network MIMO processor 135. However, independent pre-processing at each base station 115 may reduce the ability of the network MIMO processor 135 to reduce cross-cell interference, which is the main goal of IBS-MIMO.

Alternatively, the network MIMO processor 135 can collect in-phase and quadrature (i.e., quantized versions of sampled I and Q baseband) signals from all base stations 115. In this embodiment, the base stations 115 act mainly as distributed "remote radio-heads" that use the antennas 125 to receive radio frequency signals and use other circuitry to generate digitized versions of the radiofrequency signals. The baseband signal processor that demodulates and decodes these signals into information bits is located at the network MIMO processor 135. The signals from multiple coordinating base stations 115 are then jointly processed using either a zero-forcing receiver or MMSE receiver to mitigate the impact of interference on each mobile station's transmission. With centralized access to the received signals from all mobile units 110, these algorithms are expected to offer superior (compared to the embodiments that use soft decision information) performance in terms of interference suppression and consequently system capacity. However, since raw I and Q signals may require much finer quantization than pre-processed (*e*.*g*., demodulated) signals, backhaul bandwidth consumption used to carry the raw signals may be much higher than is required to carry the soft decision information.

Deployment and implementation of the network architecture described herein may take into account a number of (possibly competing or contradictory) considerations. For example, important issues to address may include (i) the division of network functions into logical groups and their implementation on different network elements according to engineering convenience and/or choice, (ii) the desired "coverage" of these logical groups, where coverage criteria may include any combination of geographical area, resources such as power and frequencies, number of users etc., and (iii) the degree of disparity from existing architectures and deployments, that creates disruptions to network enhancements. In particular, the placement of the network MIMO processor 135 in the network is a key issue and data plane operations that directly access and process the received signals at multiple base stations may be an important consideration.

In one embodiment, the signal processing algorithms employed by the network MIMO processor 135 may have a strong bearing on both the control and data plane functions. For example, uplink interference reduction (or minimization or cancellation) that is achieved via joint signal processing during one transmitted frame determines the effective SINR achieved post IBS-MIMO operations. This is critical to determining the schedule and TFs - and hence the interference characteristics - during the next frame. Therefore, the network MIMO processor 135 may be well suited to serve UL IBS-MIMO control plane functions. For another example, the signal processing algorithm determines the kind of data plane information, e.g. for raw digital samples of the antenna outputs or post-processed quantities. This in turn may determine requirements on backhaul bandwidth and computing needs. With centralized processing, the base stations 115 may be expected to pass on raw digital samples since the network MIMO processor 135 can have direct access to the necessary embedded information from which to extract CSI with joint processing, as well as perform joint demodulation and decoding for each mobile unit 110 across the cluster of base stations 115. This implies a large backhaul bandwidth requirement from the base stations 115 to the network MIMO processor 135, as well as a highly concentrated computing power at the network MIMO processor 135.

The network MIMO processor 135 and/or the base stations 115 can implement different algorithms for scheduling and computing transmission formats (TFs) for each frame. A first option is to centralize these algorithms that the network MIMO processor 135. In this option, the network MIMO processor 135 assumes full responsibility for both scheduling and TF computation since it has access to all the information that is necessary. This scenario centralizes a relatively large portion of computation at the network MIMO processor 135. The computed transmission formats are then conveyed to the base stations 115 for further transmission to the mobile units 110 over known control channels, following which the mobile units 110 transmit at the specific transmission formats. A second option is to perform the scheduling at the base stations 115 and use the network MIMO processor 135 to compute the transmission formats. In this option, scheduling is performed individually by the base stations 115. However, the computed schedules may not be binding since the network MIMO processor 135 may not be able to accommodate the union of the set of mobile units 110 scheduled by all the base stations 115. In other words, the network MIMO processor 135 computes transmission formats for all the scheduled mobile units 110, and then chooses a subset according to some optimization criterion such as maximum sum of mobile unit data rates. The identities of the finally scheduled mobile units 110 are then conveyed to the base stations 115, which in turn relay them to the mobile units 110 over known control channels.

Figure 1C conceptually illustrates a protocol stack 150 that can be used in the wireless syndication system 100. The protocol stack 150 indicates the functional distribution of the Medium Access Control (MAC) and Physical (PHY) layers. In the illustrated embodiment, the UL IBS-MIMO entity (such as the network MIMO processor 135 shown in Figure 1B) includes interfaces between (a) the base stations (BSs) and the UL-IBSMP, and (b) the UL-IBSMP and the bearer plane IP gateway. Furthermore, protocols are required for carrying different types of IBS-MIMO related messages over the interfaces. Some of the basic interfaces have been defined in existing standards, which facilitates extension for UL IBS-MIMO purposes. These interfaces also carry multiple protocols (and multiple messages within). It is possible to re-use some protocols as well, but new messages would need to be defined in support of UL IBS-MIMO.

One embodiment of a new or modified interface between the base stations and the UL-IBSMP can be defined if the UL-IBSMP is located as a separate new network element. The new interface includes newly defined associated protocols and messages. Alternatively, if the UL-IBSMP is collocated with a Radio Network Controller (RNC) - a well-defined network element in standards such as 1xEV-DO and UMTS-HSPA - existing interfaces as well as protocols can be modified and then reused by defining new UL IBS-MIMO related messages. For example, messages may be needed to carry scheduling parameters from the BSs to the UL-IBSMP in the event that BSs perform scheduling, as discussed herein. Final schedule grants and TF information can then be conveyed from the UL-IBSMP to the BSs. One embodiment of a new or modified interface between the UL-IBSMP and the IP gateway can be defined if the UL-IBSMP is located as a separate new network element. For example, a new interface would need to be defined along with associated protocols and messages. Alternatively, if the UL-IBSMP is collocated with the RNC, the existing interface and protocols between the RNC and gateway can be modified and reused by defining new UL IBS-MIMO related messages.

Referring back to Figure 1B, operation of the network MIMO processor 135 may include information exchanged between the control plane entities and the data plane entities. For example, the network MIMO processor 135 may be involved in processing the signals transmitted by mobile units 110 on the uplink and received by multiple base stations 115, as follows. Each step involved is labeled as a control plane or data plane operation.
1. Data plane: All the base stations 115 send the composite signals received on the uplink at each BS antenna (BSA) to the network MIMO processor 135;
2. Data plane: The network MIMO processor 135 estimates wireless channel state information (CSI) from each mobile unit 110 to each BSA (this could be performed by each of the base stations 115 and conveyed to the network MIMO processor 135 in order to trade off computation for bandwidth on the network);
3. Control plane: For each mobile unit 110, the network MIMO processor 135 employs predetermined criteria such as pilot and/or data channel SINR to determine the set of BSA signals that should be used to estimate that mobile unit's data;
4. Data plane: For each mobile unit 110, the network MIMO processor 135 processes the set of determined BSA signals and the CSIs to demodulate and decode the information bits transmitted by that mobile unit 110;
5. Control plane: Given the past history of CSIs and other information (buffer status at the mobile unit, priority of traffic, etc), the network MIMO processor 135 computes the next schedule, *i*.*e* selects the set of mobile units 110 that should transmit at the next frame, and computes the associated transmission formats (TFs) as well;
6. Control plane: the network MIMO processor 135 instructs (via the base stations 115) all the scheduled mobile units 110 to transmit at the assigned time instants and frequency and spatial resources with the computed TFs.

The steps in this process may be iterated for each subsequent frame transmitted over the uplink. In various embodiments, the transmission format may include parameters such as information block size, modulation and coding scheme, transmit power, OFDM tones, symbols or tiles, antenna weights, etc. These parameters could also take on a value of zero or null. For any given mobile unit 110, it is possible that the TFs from some base stations 115 may be zero, reflecting the poor or non-existent radio link from those base stations 115 to the mobile unit 110.

Figure 2 conceptually illustrates a second exemplary embodiment of a wireless communication system 200. In the second exemplary embodiment, the wireless communication system 200 includes some elements that are the same or an analogous to elements that are depicted in the first exemplary embodiment of the wireless communication system 100 shown in Figure 1. These elements are indicated by the same distinguishing numeral. However, persons of ordinary skill in the art having benefit of the present disclosure should appreciate that similar or analogous elements in the first and second exemplary embodiments may implement different functionality that may be used to support the operation of the different embodiments.

Instead of using a centralized network MIMO processor, the second exemplary embodiment of the wireless communication system 200 implements a distributed network MIMO processor 135(1-2) that includes multiple instances of the network MIMO processing functionality. Each instance of the network MIMO processor 135 is associated with one or more mobile units 110. In the illustrated embodiment, the first instance of the network MIMO processor 135(1) is associated with the mobile units 110(1-2) and is collocated with the base station 115(2). The second instance of the network MIMO processor 135(2) is associated with the mobile unit 110(3) and collocated with the base station 115(4). The association of the network MIMO processors 135 with the mobile units 110 may be predetermined and/or may be varied dynamically. For example, a mobile unit 110 may initially be assigned to one network MIMO processor 135 that may be dynamically associated with different instances of the distributed network MIMO processor 135 as he roams throughout the wireless communication system 200. The instances of the distributed network MIMO processor 135 may be implemented in any location within the wireless communication system 200. In the illustrated embodiment, the instances of the distributed network MIMO processor 135 are implemented in corresponding base stations 115.

The instances of the distributed network MIMO processor 135 are responsible for collecting signals from a set of associated base stations 115. In one embodiment, association of the instances of the distributed network MIMO processor 135 with the base stations 115 may be performed by associating each instance of the distributed network MIMO processor 135 with a pre-determined cluster of neighboring base stations 115. The clusters of base stations 115 may be either disjoint or overlapping, depending on circumstances. Alternatively, instances of the distributed network MIMO processor 135 can be associated with the base stations 115 using pilot signal strengths from the mobile unit(s) 110 that are associated with the instance of the distributed network MIMO processor 135. For example, each instance of the distributed network MIMO processor 135 can be associated with each base station 115 that measures a received pilot strength from at least one mobile in the group that exceeds a certain threshold. In the second exemplary embodiment shown in Figure 2, the first instance of the distributed network MIMO processor 135(1) is associated with the base stations 115(1-3) and the second instance of the distributed network MIMO processor 135(2) is associated with the base stations 115(3-4).

Once the span of coordination of each distributed network MIMO processor 135 is established, the base stations 115 and the associated instances of the distributed network MIMO processor 135 exchange data and signaling information over the backhaul links 130. In the illustrated embodiment, the instances of the distributed network MIMO processor 135 are depicted using dashed-line boxes to indicate that these logical entities may be implemented in a variety of locations. For example, the distributed network MIMO processor 135(1) can be implemented in the base station 115(2) and the distributed network MIMO processor 135(2) can be implemented in the base station 115(4). The backhaul links 130 can therefore be depicted as interconnecting the base stations 115. For example, the backhaul link 130(1) connects the base stations 115(1-2), the backhaul link 130(2) connects the base stations 115(2-3), and the backhaul link 130(3) connects the base stations 115(3-4). Each distributed network MIMO processor 135 may then operate within its span of coordination in a manner analogous to the centralized algorithms described herein.

The interfaces between the base stations 115 may be based on previously defined interfaces. In one embodiment, the BS-to-BS interface is a known interface that is referred to as X2 in LTE/SAE and R8 in WiMAX. Since UL-IBSMPs are located at the base stations 115, this interface can be used to convey both control and data information across base stations 115 to enable UL IBS-MIMO. The scope of this interface may need to be extended to include UL IBS-MIMO and new messages may need to be defined as well. In particular, for each mobile unit 110, the base stations 115 may use this interface to convey data plane information to another base station 115 that contains the UL-IBSMP for a specific mobile unit 110. Conversely, the UL-IBSMP must use this interface to convey TFs to all the base stations 115 for further relay to mobile units 110.

The steps involved in distributed UL IBS-MIMO processing may remain similar to the centralized model. However, the data plane information used for UL IBS-MIMO flows between base stations 115 rather than to a central point. One advantage to distributing UL-IBSMP functionality is to localize backhaul bandwidth load and enable flow between cluster base stations 115 that are almost always direct neighbors. This may reduce or even eliminate the need to impose latency requirements on the network and may also simplify deployment. Another advantage to distributing UL-IBSMP functionality is to distribute processing power through the network. With improving technology, base stations 115 are equipped with high computing capabilities to address growing wireless bandwidths, so distributed UL IBS-MIMO processing can impose manageable computational load increases. Moreover, unlike centralized UL IBS-MIMO processing, distributed UL-IBS MIMO results in no disruption to standardized network architectures. This gains added importance with the imminent evolution of mobile broadband networks to newer standards such as LTE and WiMAX, which use "flat" network architectures where all physical and MAC layer processing is concentrated in the BSs.

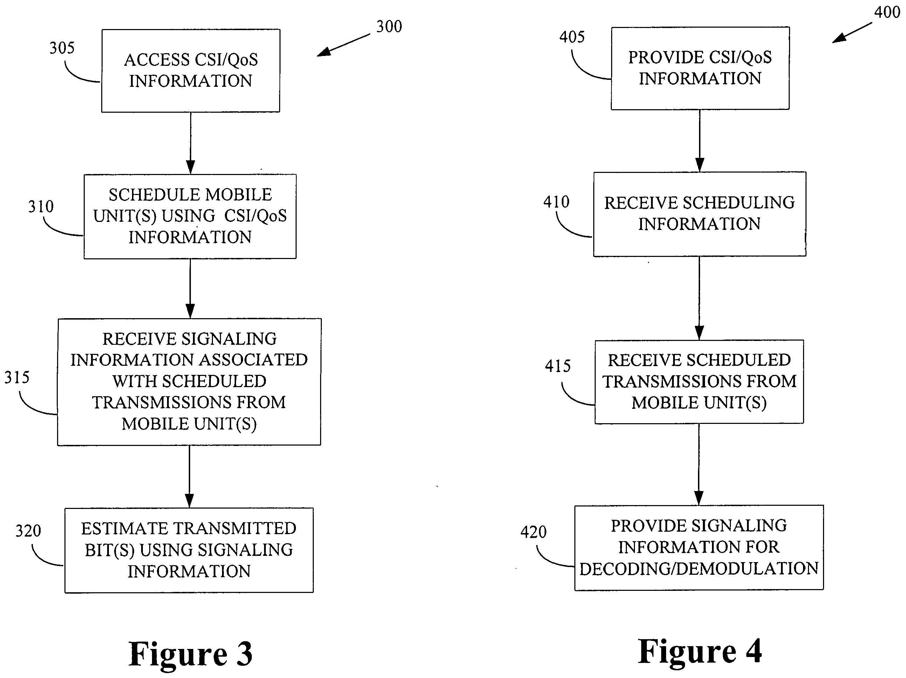

Figure 3 conceptually illustrates one exemplary embodiment of a method 300 of operating a control and data plane entity. The method 300 may be implemented in a control plane entity such as the distributed or centralized network MIMO processors 135 shown in Figures 1 and 2, although persons of ordinary skill in the art having benefit of the present disclosure should appreciate that alternative embodiments of the method 300 may also be implemented in other control and data plane entities. In the illustrated embodiment, the control plane function accesses (at 305) channel state information and (if available) quality of service information and/or scheduling requirements associated with one or more mobile units that are in communication with one or more base stations associated with the control plane entity. The control plane function then schedules (at 310) uplink communications by the mobile units using the provided information. The base stations and the mobile units may then use scheduling information provided by the control plane function to communicate over the air interface.

The data plane function receives (at 315) signals from the associated base stations. The signals may be soft decision information and/or decoded information generated using signals transmitted by the mobile units to the base stations. The data plane function then estimates (at 320) the values of the bit(s) indicated by the signals transmitted over the uplink by the mobile unit to the base stations. The data plane function performs the estimation (at 320) such that the base station signals associated with each mobile unit are combined coherently, which may reduce mutual interference between signals transmitted by different mobile units.

Figure 4 conceptually illustrates one exemplary embodiment of a method 400 of operating a base station in the wireless communication system shown in Figure 1 and/or Figure 2. In the illustrated embodiment, the base station determines channel state information, quality of service information, and/or scheduling requirements for one or more mobile units. For example, the base station may use measurements of how signal strengths to determine the channel state information and subscription information associated with each mobile unit to determine the quality of service and/or the scheduling requirements. The information is then provided (at 405) to one or more control plane entities such as the uplink network MIMO processors shown in Figures 1 and 2. The control plane function may then schedule uplink transmissions associated with the mobile units and provide this information to the base stations, which may receive (at 410) the scheduling information.

Using the scheduling information provided by the control plane function, the base station and the mobile units may communicate over the uplink. In the illustrated embodiment, the base station receives (at 415) scheduled uplink transmissions from one or more mobile units over the air interface. The base station may then provide (at 420) signaling information associated with each of the mobile units to the control plane entity associated with each of the mobile units. For example, the base station may demodulate and/or decode the received uplink signals and then provide soft decision information and/or decoded symbols to the control plane entity, which may then use the provided information to estimate one or more bits transmitted over the uplink by the mobile units.

The present application describes a broad architecture concept for uplink Network MIMO (and more broadly uplink network coordination) in cellular systems. The proposed architecture may enable network operators to harness the power of uplink Network MIMO without disruption to their extant network deployments even though Network MIMO is a disruptive physical layer technology. Further, the architectures can be used to control or manage the additional backhaul bandwidth consumption due to network MIMO related information. For example, the architectures described herein may allow for selective application of Network MIMO technologies to those users who are most likely to benefit from it, thus reducing the costs even further.

Portions of the disclosed subject matter and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the disclosed subject matter are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The disclosed subject matter is not limited by these aspects of any given implementation.

The protection sought herein is as set forth in the claims below.

## Claims

1. A method of coordinating uplink transmissions from at least one mobile unit (110) to a plurality of coordinating base stations (115), the method being implemented in a control and data plane entity and comprising:
scheduling, at a control plane function of the control and data plane entity (135), uplink signals for transmission from said at least one mobile unit (110) to the plurality of coordinating base stations (115);
receiving, at a data plane function of the control and data plane entity (135) and from the plurality of coordinating base stations (115), signals comprising information indicative of scheduled uplink signals transmitted from said at least one mobile unit (110) to the plurality of coordinating base stations (115); and
estimating, at the data plane function, information bits transmitted in the scheduled uplink signals through joint processing of the received signals from the plurality of coordinating base stations (115) using channel state information indicative of a plurality of wireless communication links (120) between said at least one mobile unit (110) and the plurality of coordinating base stations (115).

2. The method of claim 1, wherein scheduling the uplink signals comprises:
scheduling the uplink signals based on at least one of a quality-of-service requirement or channel state information for a plurality of wireless communication channels between the plurality of coordinating base stations (115) and said at least one mobile unit (110);
determining, at the control plane entity (135) and based on the channel state information, transmission formats for uplink transmissions from said at least one mobile unit (110) to the plurality of coordinating base stations (115); and
providing the transmission formats to the plurality of coordinating base stations 115).

3. The method of claim 1, wherein receiving the signals comprises receiving soft-decision information from the plurality of coordinating base stations (115), and wherein estimating the information bits transmitted in the scheduled uplink signals comprises soft-combining the soft-decision information provided by the plurality of coordinating base stations (115) and estimating the information bits using the soft-combined information.

4. The method of claim 1, wherein receiving the signals comprises receiving quantized in-phase and quadrature signals from the plurality of coordinating base stations (115), and wherein estimating the information bits transmitted in the scheduled uplink signals comprises jointly demodulating and decoding the received quantized in-phase and quadrature signals.

5. The method of claim 1, wherein the data plane entity (135) is a distributed entity comprising a plurality of data plane processors associated with a corresponding plurality of mobile units (110), and wherein estimating the information bits comprises estimating the information bits transmitted by each of the plurality of mobile units (110) using the corresponding data plane processor, and comprising associating each of the data plane processors with at least one of the plurality of mobile units (110).

6. The method of claim 5, wherein receiving the signals comprises receiving, at each of the plurality of data plane processors, signals from each base station scheduled to receive signals from the mobile unit associated with the data plane processor.

## Patentansprüche

1. Verfahren zum Koordinieren von Uplink-Übertragungen von mindestens einer mobilen Einheit (110) zu einer Vielzahl von koordinierenden Basisstationen (115),
wobei das Verfahren in einer Steuer- und Daten-Ebene-Einheit (135) implementiert ist und Folgendes umfasst:
- Planen, in einer Steuer-Ebene-Funktion der Steuer- und Daten-Ebene-Einheit (135), von Uplink-Signalen zur Übertragung von der mindestens einen mobilen Einheit (110) zu der Vielzahl von koordinierenden Basisstationen (115);
- Empfangen, in einer Daten-Ebene-Funktion der Steuer- und Daten-Ebene-Einheit (135) und von der Vielzahl von koordinierenden Basisstationen (115), von Signalen, die Informationen umfassen, die geplante Uplink-Signale angeben, die von der mindestens einen mobilen Einheit (110) an die Vielzahl von koordinierenden Basisstationen (115) übertragen werden; und
- Schätzen, in der Daten-Ebene-Funktion der Steuer- und Daten-Ebene-Einheit (135), von Informationsbits, die in den geplanten Uplink-Signalen durch gemeinsame Verarbeitung der empfangenen Signale von der Vielzahl von koordinierenden Basisstationen (115) übertragen werden, unter Verwendung von Kanalzustandsinformationen, die eine Vielzahl von drahtlosen Kommunikationsverbindungen (120) zwischen der mindestens einen mobilen Einheit (110) und der Vielzahl von koordinierenden Basisstationen (115) anzeigen.

2. Verfahren nach Anspruch 1,
wobei das Planen der Uplink-Signale Folgendes umfasst:
- Planen der Uplink-Signale basierend auf mindestens einer Servicequalitätsanforderung oder einer Kanalzustandsinformation für eine Vielzahl von drahtlosen Kommunikationskanälen zwischen der Vielzahl von koordinierenden Basisstationen (115) und der mindestens einen mobilen Einheit (110);
- Bestimmen, in der Steuer-Ebene-Einheit (135) und basierend auf der Kanalzustandsinformation, von Übertragungsformaten für Uplink-Übertragungen von der mindestens einen mobilen Einheit (110) zu der Vielzahl von koordinierenden Basisstationen (115); und
- Bereitstellen der Übertragungsformate für die Vielzahl von koordinierenden Basisstationen (115).

3. Verfahren nach Anspruch 1,
wobei das Empfangen der Signale das Empfangen von Soft-Decision-Informationen von der Vielzahl der koordinierenden Basisstationen (115) umfasst, und
wobei das Schätzen der in den geplanten Uplink-Signalen übertragenen Informationsbits ein Soft-Kombinieren der von der Vielzahl der koordinierenden Basisstationen (115) bereitgestellten Soft-Decision-Informationen umfasst und das Schätzen der Informationsbits unter Verwendung der Soft-Kombinierten-Informationen umfasst.

4. Verfahren nach Anspruch 1,
wobei das Empfangen der Signale das Empfangen von quantisierten In-Phase- und Quadratur-Signalen von der Vielzahl von koordinierenden Basisstationen (115) umfasst, und
wobei das Schätzen der in den geplanten Uplink-Signalen übertragenen Informationsbits das gemeinsame Demodulieren und Dekodieren der empfangenen quantisierten In-Phasen- und Quadratur-Signale umfasst.

5. Verfahren nach Anspruch 1,
wobei die Daten-Ebene-Einheit (135) eine verteilte Einheit ist, die eine Vielzahl von Daten-Ebene-Prozessoren aufweist, die einer entsprechenden Vielzahl von mobilen Einheiten (110) zugeordnet sind, und
wobei das Schätzen der Informationsbits ein Schätzen der Informationsbits, die von jeder von der Vielzahl von mobilen Einheiten (110) unter Verwendung des entsprechenden Daten-Ebene-Prozessors übertragen werden, umfasst und ein Zuweisen der jeweiligen Daten-Ebene-Prozessoren zu mindestens einer von der Vielzahl von mobilen Einheiten (110) umfasst.

6. Verfahren nach Anspruch 5,
wobei das Empfangen der Signale ein Empfangen, in jedem von den Daten-Ebene-Prozessoren, von Signalen von jeder Basisstation umfasst, die zum Empfangen von Signalen von der mobilen Einheit geplant ist, die dem Daten-Ebene-Prozessor zugeordnet ist.

## Revendications

1. Procédé de coordination de transmissions de liaison montante en provenance d'au moins une unité mobile (110) vers une pluralité de stations de base coordinatrices (115), le procédé étant implémenté sous forme d'une entité d'un plan de commande et de données et comprenant :
l'ordonnancement, au niveau d'une fonction d'un plan de commande de l'entité de plan de commande et de données (135), de signaux de liaison montante pour la transmission de ladite au moins une unité mobile (110) vers la pluralité de stations de base coordinatrices (115) ;
la réception, au niveau d'une fonction d'un plan de données de l'entité de plan de commande et de données (135) et en provenance de la pluralité de stations de base coordinatrices (115), de signaux comprenant des informations indicatives de signaux de liaison montante ordonnancés transmis depuis ladite au moins une unité mobile (110) vers la pluralité de stations de base coordinatrices (115) ; et
l'estimation, au niveau de la fonction de plan de données, de bits d'information transmis dans les signaux de liaison montante ordonnancés via un traitement conjoint des signaux reçus en provenance de la pluralité de stations de base coordinatrices (115) par le biais d'informations d'état de canal indiquant une pluralité de liaisons de communication sans fil (120) entre ladite au moins une unité mobile (110) et la pluralité de stations de base coordinatrices (115).

2. Procédé selon la revendication 1, selon lequel l'ordonnancement des signaux de liaison montante comprend :
l'ordonnancement des signaux de liaison montante sur la base d'au moins élément parmi une condition de qualité de service ou d'une information d'état de canal pour une pluralité de canaux de communication sans fil entre la pluralité de stations de base coordinatrices (115) et ladite au moins une unité mobile (110) ;
le calcul, au niveau de l'entité de plan de commande (135) et sur la base d'informations d'état de canal, de formats de transmission pour des transmissions de liaison montante en provenance de la au moins une unité mobile (110) vers la pluralité de stations de base coordinatrices (115) ; et
la fourniture des formats de transmission à la pluralité de stations de base coordinatrices (115).

3. Procédé selon la revendication 1, selon lequel la réception des signaux comprend la réception d'informations de décision logicielle en provenance de la pluralité de stations de base coordinatrices (115), et selon lequel l'estimation des bits d'information transmis dans les signaux de liaison montante ordonnancés comprend la combinaison logicielle des informations de décision logicielle fournies par la pluralité de stations de base coordinatrices (115) et l'estimation des bits d'information via les informations combinées logicielles.

4. Procédé selon la revendication 1, selon lequel la réception des signaux comprend la réception de signaux quantifiés en phase et de signaux en quadrature en provenance de la pluralité de stations de base coordinatrices (115), et selon lequel l'estimation des bits d'informations transmis dans les signaux de liaison montante ordonnancés comprend la démodulation et le décodage conjoints des signaux reçus quantifiés en phase et des signaux en quadrature.

5. Procédé selon la revendication 1, selon lequel l'entité de plan de données (135) est une entité distribuée comprenant une pluralité de processeurs de plans de données associée à une pluralité correspondante d'unités mobiles (110), et selon lequel l'estimation des bits d'information comprend l'estimation des bits d'information transmis par chaque unité de la pluralité d'unités mobiles (110) mettant en œuvre le processeur de plan de données correspondant, et comprenant l'association de chacun des processeurs de plan de données à au moins l'une de la pluralité d'unités mobiles (110).

6. Procédé selon la revendication 5, selon lequel la réception des signaux comprend la réception, au niveau de chacun des processeurs de la pluralité de processeurs de plan de données, de signaux en provenance de chaque station de base ordonnancée pour recevoir des signaux en provenance de l'unité mobile associée au processeur de plan de données.
